# FASCICULE DE BREVET EUROPEEN

(11) **EP 1 452 753 B1**
(45) Date de publication et mention de la délivrance du brevet: **03.05.2006**
(21) Numéro de dépôt: 04290379.9
(22) Date de dépôt: 12.02.2004
(51) Int. Cl.: F16C 19/52, G01P 3/44

(54) **Palier à roulement instrumenté**
MIT SENSOR AUSGESTATTETES WÄLZLAGER
Roller bearing with integrated sensor

(30) Priorité: 26.02.2003 FR 0302363
(43) Date de publication de la demande: 01.09.2004
(73) Titulaire: Aktiebolaget SKF, 415 50 Göteborg (SE)
(72) Inventeur: Niarfeix, François, 37000 Tours (FR); Chaussat, Sylvain, 37100 Tours (FR)
(74) Mandataire: Casalonga, Axel

(56) Documents cités:
- EP-A- 0 511 105
- WO-A-02/052280
- DE-A- 4 228 988
- FR-A- 2 813 644
- US-A- 5 018 384

## Description

La présente invention concerne le domaine des paliers à roulement instrumentés munis d'un ensemble de détection des paramètres de rotation, tels que la position angulaire, le sens de rotation, la vitesse, l'accélération.

L'invention concerne plus particulièrement un palier à roulement instrumenté comprenant un capteur solidaire d'une bague non tournante et un codeur solidaire d'une bague tournante.

De tels paliers à roulement sont utilisés par exemple pour le pilotage de moteurs électriques du type synchrone. L'indexation du capteur permet de connaître en particulier la vitesse de rotation et la position angulaire des pôles du rotor par rapport aux pôles du stator.

On connaît par le document EP A 1 037 051 un dispositif de palier à roulement instrumenté dans lequel un organe codeur est solidaire d'un arbre, un bloc capteur étant solidaire d'une bague tournante. La bague tournante est montée dans un alésage d'une partie fixe de façon à autoriser un déplacement axial relativement à la partie fixe, des rondelles coniques exerçant une force axiale sur la bague non tournante pour la maintenir en position.

Un tel dispositif utilisant plusieurs rondelles de précontrainte indépendantes du roulement et du système de détection, le constructeur de moteur doit donc gérer, manipuler et assembler un grand nombre de pièces.

L'invention se propose de remédier aux inconvénients décrits ci-dessus.

L'invention propose un palier à roulement instrumenté économique et facile à monter dans la machine à laquelle il est destiné, notamment un moteur électrique.

Le dispositif de palier à roulement instrumenté, selon un aspect de l'invention, est *d*u type comprenant une bague non tournante, une bague tournante, au moins une rangée d'éléments roulants disposés entre deux chemins de roulement des bagues tournante et non tournante, un ensemble de détection des paramètres de rotation comprenant un ensemble capteur non tournant et un codeur annulaire tournant et un organe élastique de mise en précontrainte axiale du palier à roulement, la précontrainte passant par les éléments roulants. Ledit organe élastique est de forme annulaire et de diamètre inférieur ou égal à celui de la bague extérieure du roulement, ledit organe élastique comprenant une surface d'appui prévue pour être en contact avec un élément extérieur audit dispositif afin d'exercer, par réaction un effort axial sur la bague non tournante dans une direction opposée à l'ensemble de détection. Ledit organe élastique est retenu axialement sur l'ensemble capteur. L'effort axial est exercé directement ou indirectement.

La retenue axiale de l'organe élastique sur l'ensemble de détection préalable au montage dudit ensemble de détection sur le palier à roulement auquel il est destiné permet une réduction du nombre de pièces à approvisionner et à monter. On évite des erreurs de fabrication résultant de l'oubli de l'organe élastique. L'ensemble de détection présente un encombrement radial faible, du fait de l'organe élastique dont le diamètre extérieur est inférieur ou égal à celui de la bague extérieure du roulement. L'effort axial peut être exercé par contact direct de l'organe élastique sur la bague non tournante. Alternativement, l'effort axial peut être exercé par l'intermédiaire d'un autre élément, par exemple une carte de circuit imprimé.

Dans un mode de réalisation de l'invention, l'organe élastique est une rondelle ondulée.

Dans un autre mode de réalisation de l'invention, l'organe élastique est une rondelle conique.

Dans un mode de réalisation de l'invention, l'organe élastique est une rondelle munie de languettes élastiques.

Avantageusement, l'ensemble capteur comprend un corps ou bloc-capteur muni de moyens de retenue de l'organe élastique. Les moyens de retenue peuvent comprendre au moins un doigt.

Dans un mode de réalisation de l'invention, l'ensemble capteur comprend un circuit imprimé et un élément capteur supporté par le circuit imprimé, l'organe élastique étant en contact avec le circuit imprimé d'un côté opposé à l'élément capteur. L'organe élastique peut être disposé axialement entre le circuit imprimé et des moyens de retenue de l'organe élastique faisant partie de l'ensemble capteur, le circuit imprimé prenant part à la transmission de l'effort axial entre la bague non tournante et l'organe élastique. Le dispositif, outre sa compacité radiale, peut présenter une compacité axiale satisfaisante.

Dans un mode de réalisation de l'invention, les éléments roulants transmettent ladite précontrainte axiale d'une bague à l'autre du palier à roulement.

Dans un mode de réalisation de l'invention, l'organe élastique de mise en précontrainte axiale du palier à roulement pousse la bague non tournante à l'opposé dudit ensemble de détection des paramètres de rotation.

L'invention propose également un ensemble de détection des paramètres de rotation *d*estiné à être monté dans un palier comprenant un ensemble capteur non tournant, un codeur annulaire tournant, et un organe élastique de mise en précontrainte axiale. Ledit organe élastique est de forme annulaire. Ledit organe élastique est de diamètre inférieur ou égal à celui de l'ensemble de détection. Ledit organe élastique comprend une surface d'appui prévue pour être en contact avec un élément extérieur audit dispositif afin d'exercer par réaction un effort axial sur l'ensemble de détection dans une direction opposée à l'ensemble de détection. L'organe élastique est retenu axialement sur l'ensemble capteur. L'effort axial est exercé directement ou indirectement.

Dans un mode de réalisation de l'invention, l'organe élastique comprend une rondelle.

L'invention propose également un moteur électrique comprenant un rotor, un stator, un palier à roulement et un dispositif de palier à roulement instrumenté *tel que décrit ci-dessus.*

Avantageusement, l'organe élastique est disposé axialement entre l'ensemble capteur et une partie non tournante du moteur, par exemple une partie du carter ou une partie rapportée liée au carter.

L'invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un palier à roulement instrumenté selon un mode de réalisation de l'invention ;

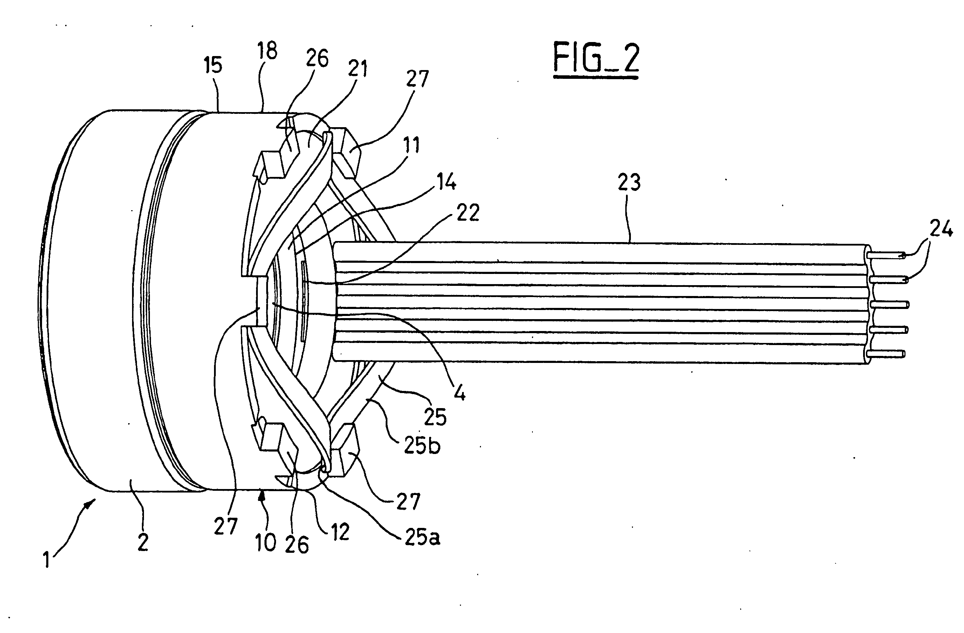

- la figure 2 est une vue en perspective du palier à roulement de la figure 1 ;
- la figure 3 est une vue partielle en coupe axiale d'un moteur électrique selon un mode de réalisation de l'invention ; et
- la figure 4 est une vue en coupe axiale du moteur électrique de la figure 3.

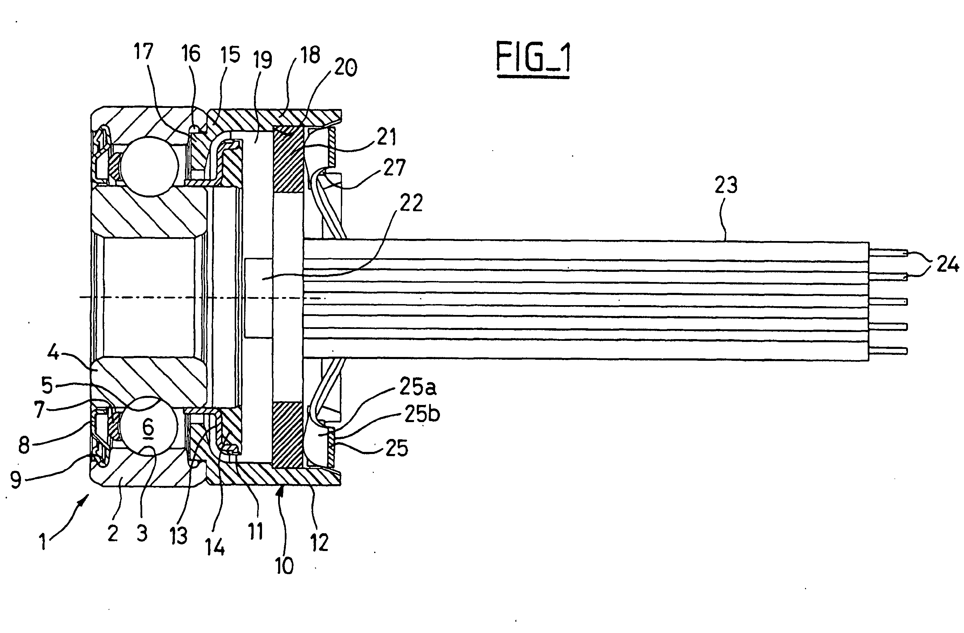

Sur la figure 1, le palier à roulement instrumenté, référencé 1 dans son ensemble, est prévu pour être monté sur l'extrémité d'un arbre tournant d'un moteur électrique non représenté. Le roulement 1 comprend une bague extérieure 2 pourvue d'un chemin de roulement 3, une bague intérieure 4 pourvue d'un chemin de roulement 5, une rangée d'éléments roulants 6, ici des billes, disposés entre les chemins de roulement 3 et 5, une cage 7 de maintien de l'espacement circonférentiel des éléments roulants 5 et un joint d'étanchéité 8 monté dans une rainure 9 de la bague extérieure 2 d'un côté de la rangée d'éléments roulants 6. Le roulement 1 est en outre équipé d'un ensemble de détection 10 se composant d'un codeur 11 et d'un ensemble capteur 12.

Le codeur 11 comprend un support annulaire 13 à section en S, avec une portion cylindrique emmanchée sur une portée extérieure de la bague intérieure tournante 4, une portion radiale dirigée vers l'extérieur et une autre portion cylindrique orientée à l'opposé des éléments roulants 6, et une partie active 14 sous la forme d'un anneau multipolaire réalisé en plastoferrite ou en élastoferrite surmoulé sur le support 13, la partie active 14 étant disposée axialement en saillie par rapport aux surfaces frontales radiales délimitant les bagues extérieure 2 et intérieure 4 du roulement 1.

L'ensemble capteur 12 comprend un bloc capteur 15 en matériau synthétique, solidarisé de façon rigide à la bague extérieure 2. Le bloc capteur 15 vient en contact avec la surface radiale frontale de la bague extérieure 2 du côté opposé au joint d'étanchéité 8 et vient se fixer dans une rainure 16 symétrique de la rainure 8 par rapport à un plan passant par le centre des éléments roulants 6. Le bloc capteur 15 comprend une partie substantiellement radiale 17 disposée axialement entre les éléments roulants 6 et la partie radiale du support 13 du codeur 11 et radialement entre la rainure 16 et la partie cylindrique du support 13 emmanchée sur la portée extérieure de la bague intérieure 4, et une partie 18 substantiellement tubulaire présentant un diamètre extérieur légèrement inférieur au diamètre extérieur de la bague extérieure 2 et s'étendant axialement à l'opposé des éléments roulants 6. La partie tubulaire 18 comprend un alésage 19 pourvu d'un épaulement 20. La partie tubulaire 18 entoure radialement la partie active 14 du codeur 11.

L'ensemble capteur 12 comprend également une carte 21 de circuit imprimé ou de circuit intégré de forme annulaire montée dans l'alésage 19 jusqu'à contact avec l'épaulement 20 disposé sensiblement au milieu de la partie tubulaire 18, un ou plusieurs éléments capteurs 22 supportés par la carte 21 du côté du codeur 11, et une nappe de connexion 23. La carte 21 possède un alésage permettant de laisser passer un arbre de moteur. Le ou les éléments capteurs 22 peuvent être du type à effet Hall. La nappe de connexion 23 est reliée à la carte 21 du côté opposé aux éléments capteurs 22 et comprend une pluralité de conducteurs 24 susceptibles de transmettre de l'énergie et/ou des signaux électriques. Le ou les éléments capteurs 22 sont disposé avec un léger entrefer axial par rapport à la partie active 14 du codeur 11.

Le roulement 1 comprend en outre un organe de précontrainte axiale 25, se présentant ici sous la forme d'une rondelle ondulée, disposé dans l'alésage 19 et en contact avec la carte 21 par une surface 25a du même côté que la nappe de connexion 23. A l'extrémité libre de la partie tubulaire 18 du bloc capteur 15, sont formés une pluralité de doigts parmi lesquels trois doigts 26 assurent la retenue axiale de la carte 21 de façon qu'elle soit immobilisée axialement entre l'épaulement 20 et les doigts 26. Les doigts 26 s'étendent radialement vers l'intérieur en saillie par rapport à l'alésage 19.

Il est également prévu trois autres doigts de retenue 27 également circonférentiellement répartis pour la retenue de l'organe de précontrainte axiale 25 faisant également saillie vers l'intérieur par rapport à l'alésage 19. Les doigts de retenue 27 sont en contact avec une surface 25b de l'organe de précontrainte axiale 25 du côté opposé à la surface 25a. L'organe de précontrainte axiale 25 constitue avec le roulement 1 un sous-ensemble prémonté qui peut être assemblé de façon économique avec les autres constituants d'un moteur électrique.

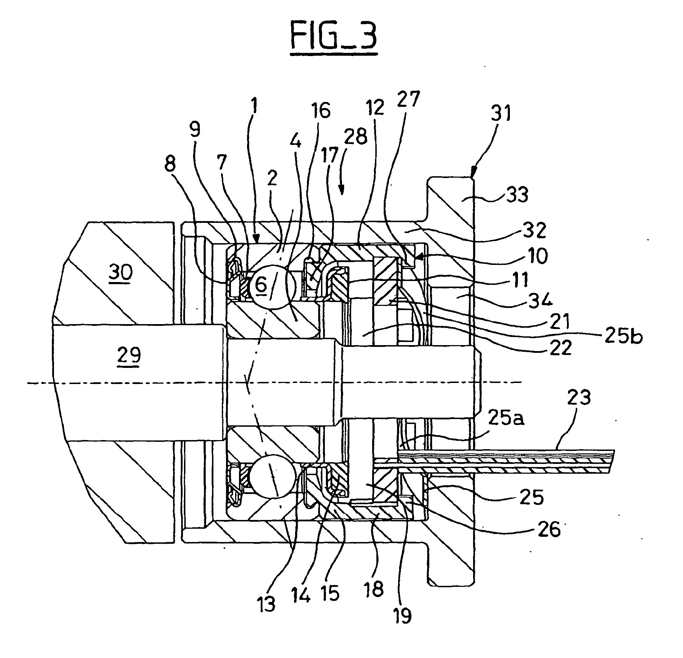

Comme on peut le voir sur la figure 3, le roulement instrumenté 1 est monté dans un moteur 28 dont seule une partie de l'extrémité est représentée. L'alésage de la bague intérieure 4 est monté avec serrage sur un arbre 29 solidaire d'un rotor 30. La bague extérieure 2 est montée dans un carter moteur 31 comportant généralement plusieurs éléments et dont seulement une partie est représentée. La bague extérieure 2 est montée avec un ajustement glissant dans une portion tubulaire 32 du carter 31. Le carter 31 comporte également une partie radiale 33 disposée à l'extrémité de la partie tubulaire 32 opposée au rotor 30 et présentant une forme annulaire avec un alésage 34 par lequel passe l'extrémité de l'arbre 29 et la nappe de connexion 24. La surface 25b de l'organe de précontrainte axiale 25 est en appui sur la face radiale intérieure de la partie radiale 33 du carter 31. Ainsi, l'organe de précontrainte axiale 25 tend à pousser la bague extérieure 2 vers le rotor 30 par l'intermédiaire de la carte 21 et du bloc capteur 15, ce qui permet une précharge axiale du roulement 1.

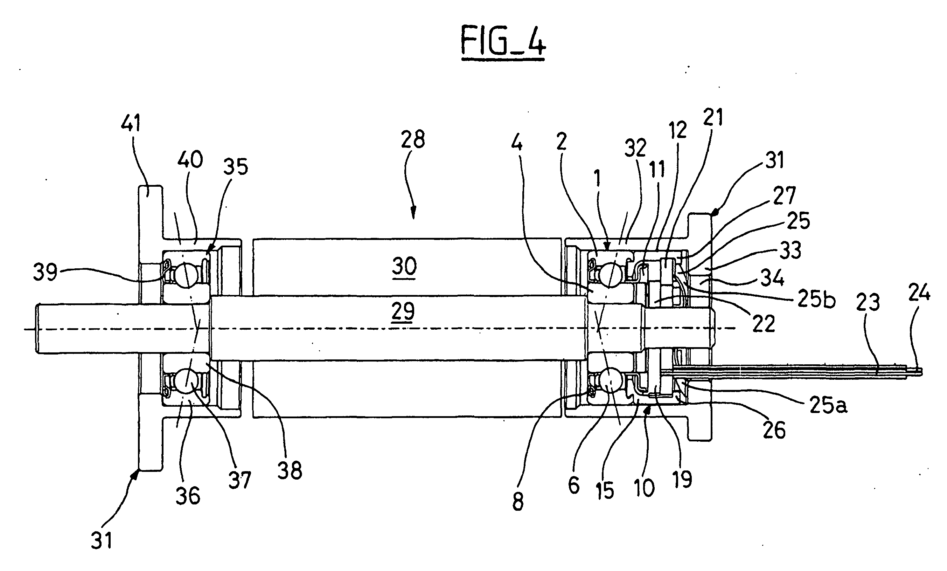

Sur la figure 4, le moteur 28 est partiellement représenté de façon schématique. L'extrémité de l'arbre 29 opposée au roulement 1 est équipée d'un roulement 35 de type conventionnel non instrumenté à une rangée d'éléments roulants, comprenant une bague extérieure 36, une rangée d'éléments roulants 37, ici des billes, une bague intérieure 38 solidaire de l'arbre 29 par emmanchement serré et un élément d'étanchéité 39 solidaire de la bague extérieure 36 et venant former un passage étroit avec la bague intérieure 38. La bague extérieure 36 est montée dans le carter 31 du moteur, qui comprend une partie tubulaire 40 et une partie radiale 41 disposée à l'extrémité de la partie tubulaire 40 opposée au rotor 30, laissant ouvert un passage central dans lequel l'arbre 29 fait saillie. La bague extérieure 36 du roulement 35 peut être emmanchée à force dans la partie tubulaire 40. Bien entendu, les différentes parties du carter 32, 33, 40 et 41 sont fermement liées ensemble de façon non représentée.

La précontrainte axiale exercée par l'organe de précontrainte axiale 25 se transmet de la bague extérieure 2 du roulement 1 à la bague intérieure 4 par l'intermédiaire des éléments roulants 6, puis à l'arbre 29, à la bague intérieure 38 du roulement 35, aux éléments roulants 37 et à la bague extérieure 36. On comprend que la présence d'un seul organe de précontrainte axiale 25 permet de précharger axialement le roulement 1 et le roulement 35 tout en s'accomodant des dilatations différentes de l'arbre en général en acier et du carter en général à base d'aluminium, le roulement 1 pouvant glisser axialement par rapport au carter qui le supporte.

L'assemblage du roulement 1 est effectué de la façon suivante. On positionne la carte 21 dans l'alésage 19 du bloc capteur 15 jusqu'à venir en butée contre l'épaulement 20. On positionne ensuite l'organe de précontrainte axiale 25 dans l'alésage 19 contre la carte 21. On déforme ensuite par chauffage des pions issus de l'extrémité libre de la partie tubulaire 18 du bloc capteur 15 pour former les doigts de retenue 26 et 27 qui assurent le positionnement définitif et la retenue axiale de la carte 21 et de l'organe de retenue axiale 25.

L'organe de retenue axiale 25 est ainsi en appui sur une partie du moteur extérieure au palier à roulement et exerce par réaction une précontrainte axiale la bague non tournante, les éléments roulants et la bague tournante. Le roulement est préchargé axialement. Dans le mode réalisation représenté, la précharge est transmise par la carte 21 et le bloc capteur 15, toutefois on peut aussi prévoir un contact direct de l'organe de retenue axiale 25 avec le bloc capteur 15 ou encore avec la bague non tournante.

Bien entendu, on pourrait prévoir une bague extérieure tournante et une bague intérieure non tournante en fonction de la machine à laquelle le roulement est destiné. Les termes " tournant" et "non tournant" s'entendent de façon relative.

L'ensemble ainsi obtenu est particulièrement compact. Son transport et sa manipulation se font en toute sécurité sans risque de perte de la rondelle élastique. Le fabriquant de moteurs a une pièce en moins à approvisionner, à gérer et à monter. Le montage de l'ensemble dans le moteur est particulièrement aisé et ne demande aucune précaution particulière. On assure ainsi avec un seul ensemble de palier à roulement, la fonction palier, une fonction électronique de détection, par exemple la détection de la vitesse ou la détection dans la position angulaire et la fonction mécanique de mise en précontrainte axiale des roulements du moteur.

## Revendications

1. Dispositif de palier à roulement instrumenté (1), du type comprenant une bague non tournante (2), une bague tournante (4), au moins une rangée d'éléments roulants (6) disposés entre deux chemins de roulement (3, 5) des bagues tournante (4) et non tournante (2), un ensemble de détection des paramètres de rotation (10) comprenant un ensemble capteur (12) non tournant et un codeur annulaire (11) tournant, et un organe élastique (25) de mise en précontrainte axiale du palier à roulement, la précontrainte passant par les éléments roulants, ledit organe élastique (25) étant de forme annulaire et de diamètre inférieur ou égal à celui de la bague extérieure du roulement, ledit organe élastique (25) comprenant une surface d'appui prévue pour être en contact avec un élément extérieur audit dispositif afin d'exercer par réaction un effort axial sur la bague non tournante (2) dans une direction opposée à l'ensemble de détection (10), **caractérisé par le fait que** ledit organe élastique (25) est retenu axialement sur l'ensemble capteur, l'effort axial étant exercé directement ou indirectement.

2. Dispositif selon la revendication 1, **caractérisé par le fait que** l'organe élastique (25) est une rondelle ondulée.

3. Dispositif selon la revendication 1, **caractérisé par le fait que** l'organe élastique est une rondelle conique.

4. Dispositif selon l'une quelconque des revendications précédentes, **caractérisé par le fait que** l'organe élastique est une rondelle munie de languettes élastiques.

5. Dispositif selon l'une quelconque des revendications précédentes, **caractérisé par le fait que** l'ensemble capteur (12) comprend un corps muni de moyens de retenue de l'organe élastique (25).

6. Dispositif selon la revendication 5, **caractérisé par le fait que** lesdits moyens de retenue comprennent au moins un doigt (27).

7. Dispositif selon l'une quelconque des revendications précédentes, **caractérisé par le fait que** l'ensemble capteur (12) comprend un circuit imprimé (21) et au moins un élément capteur (22) supporté par le circuit imprimé, l'organe élastique (25) étant en contact avec le circuit imprimé d'un côté opposé à l'élément capteur (22).

8. Dispositif selon la revendication 7, **caractérisé par le fait que** l'organe élastique (25) est disposé axialement entre le circuit imprimé (21) et des moyens de retenue dudit organe élastique (25), faisant partie de l'ensemble capteur (12).

9. Dispositif selon l'une quelconque des revendications précédentes, **caractérisé par le fait que** les éléments roulants (6) transmettent ladite précontrainte axiale.

10. Dispositif selon l'une quelconque des revendications précédentes, **caractérisé par le fait que** l'organe élastique (25) de mise en précontrainte axiale du palier à roulement pousse la bague non tournante (2) à l'opposé dudit ensemble de détection des paramètres de rotation (10).

11. Ensemble de détection des paramètres de rotation (10) *destiné à être monté dans un palier* comprenant un ensemble capteur (12) non tournant, un codeur *annulaire* (11) tournant, et un organe élastique (25) de mise en précontrainte axiale, ledit organe élastique (25) étant de forme annulaire, ledit organe élastique (25) *étant* de diamètre inférieur ou égal à celui de l'ensemble de détection, ledit organe élastique (25) comprenant une surface d'appui prévue pour être en contact avec un élément extérieur audit dispositif afin d'exercer, par réaction un effort axial sur l'ensemble de détection dans une direction opposée à l'ensemble de détection (10), ***caractérisé par le fait que** l'organe élastique (25) est retenu axialement sur l'ensemble capteur (12), l'effort axial étant exercé directement ou indirectement.*

12. Ensemble selon la revendication 11, **caractérisé par le fait que** l'organe élastique (25) comprend une rondelle.

13. Moteur électrique (28) comprenant un rotor (30), un stator et un dispositif de palier à roulement instrumenté (1), selon l'une quelconque des revendications 1 à 10.

14. Moteur selon la revendication 13, **caractérisé par le fait que** l'organe élastique (25) est disposé entre l'ensemble capteur (12) et une partie non tournante du moteur.

## Patentansprüche

1. Mit einer Messeinrichtung ausgestattete Lageranordnung (1), zu der gehören: ein stillstehender Ring (2), ein umlaufender Ring (4), wenigstens eine Reihe von Wälzkörpern (6), die zwischen zwei Laufbahnen (3, 5) des stillstehenden Rings (2) und des umlaufenden Rings eingefügt sind, eine Sensoranordnung (10) zum Erfassen von Rotationsparametern, die einen stillstehenden Aufnehmer (12) und ein umlaufender ringförmiger Kodierer (11) aufweist, und ein elastisches Glied (25) zum axialen Vorspannen des Wälzlagers, wobei die Vorspannung über die Wälzkörper übertragen wird und das elastische Glied (25) eine ringförmige Gestalt und einen Durchmesser aufweist, der kleiner oder gleich dem des Außenrings des Wälzlagers ist und wobei das elastische Glied (25) eine Anlagefläche trägt, die mit einem äußeren Element der Anordnung in Berührung steht, um auf den stillstehenden Ring (2) eine axiale Reaktionskraft in entgegengesetzter Richtung zu der Sensoranordnung (10) auszuüben, **dadurch gekennzeichnet, dass** das elastische Glied (25) in axialer Richtung an der Aufnehmeranordnung aufgenommen ist und dass die Axialkraft mittelbar oder unmittelbar ausgeübt wird.

2. Anordnung nach Anspruch 1, **dadurch gekennzeichnet, dass** das elastische Glied (25) eine gewellte Scheibe ist.

3. Anordnung nach Anspruch 1, **dadurch gekennzeichnet, dass** das elastische Glied eine Tellerfederscheibe ist.

4. Anordnung nach einem der vorhergehenden Ansprüche, **dadurch gekennzeichnet, dass** das elastische Glied eine Scheibe ist, die mit elastischen Zungen versehen ist.

5. Anordnung nach einem der vorhergehenden Ansprüche **dadurch gekennzeichnet, dass** die Aufnehmeranordnung (12) einen Grundköper aufweist, der mit Haltemitteln für das elastische Glied (25) versehen ist.

6. Anordnung nach Anspruch 5, **dadurch gekennzeichnet, dass** die Haltemittel wenigstens einen Finger (27) umfassen.

7. Anordnung nach einem der vorhergehenden Ansprüche **dadurch gekennzeichnet, dass** die Aufnehmeranordnung (12) eine gedruckte Schaltung (21) und wenigstens ein Aufnehmerelement (22) aufweist, das auf der gedruckten Schaltung sitzt und dass das elastische Glied (25) mit der gedruckten Schaltung auf der von dem Aufnehmerelement (22) abliegenden Seite in Berührung steht.

8. Anordnung nach Anspruch 7, **dadurch gekennzeichnet, dass** das elastische Glied (25) in axialer Richtung zwischen der gedruckten Schaltung (21) und den Haltemitteln des elastischen Gliedes (25) angeordnet ist, das ein Teil der Aufnehmeranordnung (12) bildet.

9. Anordnung nach einem der vorhergehenden Ansprüche, **dadurch gekennzeichnet, dass** die Wälzköper (6) die axiale Vorspannkraft übertragen.

10. Anordnung nach einem der vorhergehenden Ansprüche **dadurch gekennzeichnet, dass** das elastische Glied (25), das das Wälzlager unter Vorspannung setzt, den stillstehenden Ring (2) in Richtung von der Messanordnung für Rotationsparameter (10) weg drückt.

11. Messanordnung (10) für Rotationsparameter, die dazu eingerichtet ist, in einem Lager montiert zu sein und zu der ein stillstehender Aufnehmer (12), ein umlaufender ringförmiger Kodierer (11) und ein elastisches Glied (25), das axial unter Vorspannung sitzt, gehören, wobei das elastische Glied (25) eine ringförmige Gestalt hat, einen kleineren oder den gleichen Durchmesser aufweist wie die Sensoranordnung, und eine Anlagefläche trägt, die dazu vorgesehen ist mit einem Außenelement der Anordnung in Eingriff zu kommen um eine axiale Reaktionskraft auf die Sensoranordnung in einer Richtung auszuüben, die der Sensoranordnung (10) entgegen gerichtet ist, **dadurch gekennzeichnet, dass** das elastische Glied (25) in axialer Richtung auf der Aufnehmeranordnung (12) gehalten ist und dass die Axialkraft direkt oder indirekt ausgeübt wird.

12. Anordnung nach Anspruch 11, **dadurch gekennzeichnet, dass** das elastische Glied (25) eine Scheibe aufweist.

13. Elektromotor (28) mit einem Anker (30), einem Stator und einem mit Sensoren ausgerüsteten Lager (1) nach einem der Ansprüche 1 bis 10.

14. Motor nach Anspruch 13, **dadurch gekennzeichnet, dass** das elastische Glied (25) zwischen der Aufnehmeranordnung (12) und einem stillstehenden Teil des Motors angeordnet ist.

## Claims

1. Instrumented rolling bearing device (1) of the type comprising a non-rotating race (2), a rotating race (4), at least one row of rolling elements (6) arranged between two raceways (3, 5) of the rotating (4) and non-rotating (2) races, an assembly (10) for detecting rotation parameters comprising a non-rotating sensor assembly (12) and a rotating annular encoder (11), and an elastic member (25), for axially prestressing the rolling bearing, the prestress passing through the rolling elements, said elastic member (25) being of annular shape and having a diameter smaller than or equal to that of the outer race of the bearing, said elastic member (25) comprising a supporting surface designed to be in contact with an element outside said device in order to exert, by reaction, an axial force on the non-rotating race (2) in a direction opposite to the detection assembly (10), **characterized in that** said elastic member (25) is retained axially on the sensor assembly, the axial force being exerted directly or indirectly.

2. Device according to Claim 1, **characterized in that** the elastic member (25) is a corrugated washer.

3. Device according to Claim 1, **characterized in that** the elastic member is a conical washer.

4. Device according to any one of the preceding claims, **characterized in that** the elastic member is a washer provided with elastic tongues.

5. Device according to any one of the preceding claims, **characterized in that** the sensor assembly (12) comprises a body fitted with means for retaining the elastic member (25).

6. Device according to Claim 5, **characterized in that** said retaining means comprise at least one finger (27).

7. Device according to any one of the preceding claims, **characterized in that** the sensor assembly (12) comprises a printed circuit (21) and at least one sensor element (22) supported by the printed circuit, the elastic member (25) being in contact with the printed circuit on an opposite side to the sensor element (22).

8. Device according to Claim 7, **characterized in that** the elastic member (25) is arranged axially between the printed circuit (21) and means for retaining said elastic member (25), forming part of the sensor assembly (12).

9. Device according to any one of the preceding claims, **characterized in that** the rolling elements (6) transmit said axial prestress.

10. Device according to any one of the preceding claims, **characterized in that** the elastic member (25) for axially prestressing the rolling bearing pushes the non-rotating race (2) away from said assembly (10) for detecting rotation parameters.

11. Assembly (10) for detecting rotation parameters, intended to be mounted in a bearing, comprising a non-rotating sensor assembly (12), a rotating annular encoder (11), and an axially prestressing elastic member (25), said elastic member (25) being of annular shape, said elastic member (25) having a diameter smaller than or equal to that of the detection assembly, said elastic member (25) comprising a supporting surface designed to be in contact with an element outside said device in order to exert, by reaction, an axial force on the detection assembly in a direction opposite to the detection assembly (10), **characterized in that** the elastic member (25) is retained axially on the sensor assembly (12), the axial force being exerted directly or indirectly.

12. Assembly according to Claim 11, **characterized in that** the elastic member (25) comprises a washer.

13. Electric motor (28) comprising a rotor (30), a stator and an instrumented rolling bearing device (1) according to any one of Claims 1 to 10.

14. Motor according to Claim 13, **characterized in that** the elastic member (25) is arranged between the sensor assembly (12) and a non-rotating part of the motor.
